**Europäisches Patentamt**

**European Patent Office**

**Office européen des brevets**

(19)

(11) Veröffentlichungsnummer: **0 054 510**
**A1**

(12) **EUROPÄISCHE PATENTANMELDUNG**

(21) Anmeldenummer: 81810478.8

(22) Anmeldetag: 07.12.81

(51) Int. Cl.³: **B 23 D 77/02**
**B 23 B 27/20**

(30) Priorität: 16.12.80 CH 9252/80

(43) Veröffentlichungstag der Anmeldung:
23.06.82 Patentblatt 82/25

(84) Benannte Vertragsstaaten:
AT BE CH DE FR GB IT LI LU NL SE

(71) Anmelder: **Bruno Zwahlen AG**
In der Hürd
CH-8854 Galgenen(CH)

(72) Erfinder: **Zwahlen, Bruno**
In der Hürd
CH-8854 Galgenen(CH)

(74) Vertreter: **Tobler, Walter**
Im Weingarten 15
CH-9242 Oberuzwil(CH)

(54) **Kombinations-Werkzeug.**

(57) Kombinationswerkzeuge zur spanenden oder span- und umformenden Feinbearbeitung von Werkstücken, besonders Reibahlen für die Bearbeitung von Bohrungen, dessen Werkzeug-Grundkörper mit Einsatzkörpern aus Einkristall, besonders aus der Karborundum-Gruppe wie Saphir und Rubin, aber auch aus der Rutil- und Spinell-Gruppe bestückt sind. Das Tempern der Einkristalle vermindert deren Brüchigkeit.

Fig. 4

EP 0 054 510 A1

Croydon Printing Company Ltd.

KOMBINATIONS - WERKZEUG

Die Erfindung betrifft ein Kombinationswerkzeug nach dem Oberbegriff des Patentanspruches.

Es ist bisher bekannt, Werkzeuge zur spanenden oder span- und umformenden Feinbearbeitung von Werkstücken mit Einsatzkörpern, sowohl aus gesintertem Metallpulver als auch keramischen Metalloxyden zu Kombinationswerkzeugen zu gestalten. Damit werden gegenüber hochwertigen Schnellarbeits-Stählen mehrfache Standzeiten erreicht. Für die Feinbearbeitung, besonders derjenigen von Bohrungen mittels Reibahlen, können aber keramische Werkstoffe, welche sehr hohe Schnittgeschwindigkeiten benötigen, nicht angewendet werden.

Es wurde auch schon versucht, körniges Korund in Eisatzkörper einzuarbeiten und diese mit Werkzeuggrundkörpern zu verbinden, was zum Charakter eines Schleifwerkzeuges mit dessen Anwendungseigenarten führt.

Die der Erfindung zu Grunde liegende Aufgabe besteht darin, spanende oder span- und umformende Kombinations-Werkzeuge für die Feinbearbeitung, besonders solche zum Reiben und Senken von Bohrungen, mit Einsatzkörpern sehr grosser Formbeständigkeit und damit sehr grossen Standwegen zu versehen. Es wurde gefunden, dass an sich bekannte Einkristalle, welche die Mohs'sche Härte zwischen 8 und 9 aufweisen, besonders solche der Karborundumgruppe wie Saphir und Rubin, dafür anwendbar sind. Im Gegensatz zu deren bisherigen technischen Anwendung für die Lagerung rotierender Teile oder als Ziehmatrizen für das Strangumformen von Metallen, wird gemäss der Erfindung deren Anwendung neuartig auf spanendes oder span- und umformendes Feinbearbeiten von Werkstücken ausgedehnt.

Gemäss der Erfindung ist das Kombinations-Werkzeug dadurch gekennzeichnet, dass der Einsatzkörper aus einem Einkristall gebildet ist. Als Einkristalle können besonders diejenigen der Karborundumgruppe, wie Saphir und Rubin, oder aber auch Rutil und Spinell, mit der Mohs'schen Härte zwischen 7 und 9 angewendet werden.
Bei Kombinations-Werkzeugen zur Feinbearbeitung von Bohrungen, besonders Reibahlen, mit mehreren auf den Umfang des Werkzeug-Grundkörpers verteilt angeordneten Einsatzkörpern, können die dafür einzusetzenden Einkristalle durch Kleben mit dem Werkzeug-Grundkörper verbunden werden.

Die Erfindung betrifft weiter eine Reibahle zur span- und umformenden Feinbearbeitung von Bohrungen, bestehend aus einem Reibahlen-Grundkörper und mehreren über dessen Umfang verteilt aufgeklebten Einsatzkörpern, deren Bearbeitungsschneiden der zu bearbeitenden Bohrung angepasst geformt sind, mit dem kennzeichnenden Merkmal, dass Einkristalle aus der Karborundum- Gruppe, besonders Saphir und Rubin als Einsatzkörper angewendet werden.

Die Figur 1 zeigt eine gerade verzahnte-, und zugleich
Sacklochreibahle.
Die Figur 2 zeigt eine geneigt verzahnte Reibahle.
Die Figur 3 zeigt eine nachstellbare Reibahle.
Die Figur 4 zeigt einen Aussschnitt einer Kombinationsreibahle mit durch Leimen bestückten Einsatzkörpern.

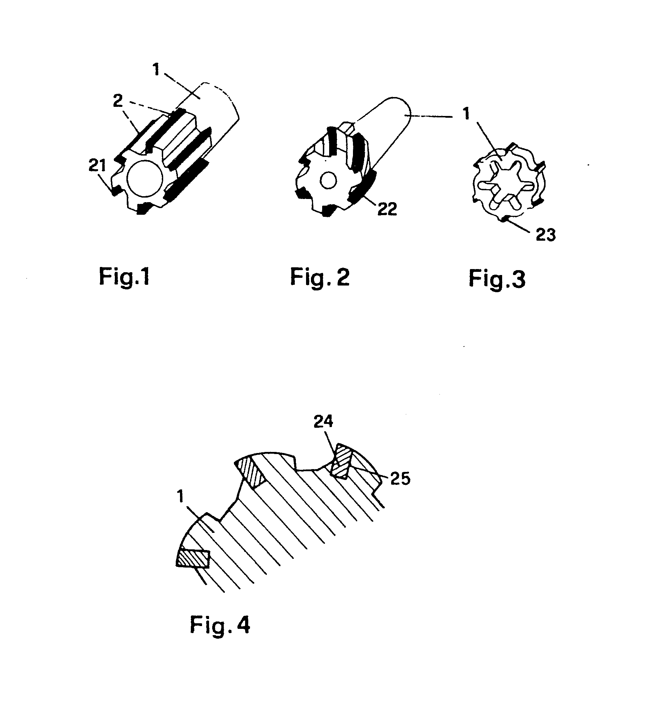

Kombinations-Reibahlen bestehen aus einem Werkzeug-Grundkörper 1 und mehreren Einsatzkörpern 2. Dabei können solche
Einsatzkörper 21 gemäss Figur 1 parallel zur Werkzeugachse,
Einsatzkörper 22 gemäss Figur 2 mit positivem oder negativem
Neigungswinkel geneigt zur Werkzeugachse oder die Einsatzkörper 23 gemäss Figur 3 für nachstellbare Reibahlen besonders ausgebildet sein. Während bei bekannten Ausführungen
gemäss den Figuren 1 bis 3 besonders die aus Hartmetall
geformten Einsatzkörper 2 aufgelötet auf Ausnehmungen sind,
ist für das Aufkleben von Einkristall-Einsatzkörpern aus
der Karborundumgruppe, besonders Saphir, Rubin, eine besondere Ausbildung erforderlich. Eine solche Möglichkeit ist
in Figur 4 dargestellt, indem im Werkzeug-Grundkörper 1
zur Aufnahme jedes Einkristall-Einsatzkörpers 24, je eine
Nut 25 ausgebildet ist. Zum Aufleimen der Saphir- oder
Rubin-Einsatzkörper wird der Leim im Bereiche der Nut 25
aufgebracht und der Einsatzkörper eingefügt. Damit werden
die bei der Bearbeitung eines Werkstückes auftretenden
Radialkräfte und Umfangsmomente sicher auf den mit einem
Antriebsorgan verbundenen Werkzeug-Grundkörper übertragen.
Anstelle von Verbindungen der Einsatzkörper mit dem Grundkörper durch Aufleimen sind auch an sich bekannte Klemmverbindungen anwendbar. Die Einsatzkörper 2 werden am fertig
montierten Kombinations-Werkzeug auf das Arbeitsmass bezüglich Durchmesser, Schnittwinkel und Freiwinkel geschliffen.
Kombinations-Werkzeuge mit Saphir- oder Rubin-Einsätzen
sind auch für andere Feinbearbeitungen, bei denen bisher
Hartmetalle gebräuchlich waren, einsetzbar.
Die den Einkristallen im allgemeinen eigentümliche Splitter-
und Bruchempfindlichkeit lässt sich vermindern durch eine
thermische Behandlung, welche tempern genannt wird.

Offenbar werden dadurch im Kristallgefüge vorhandene Spannungen ausgeglichen, dies erhöht die bei Bearbeitungwerkzeugen wichtige Schlag- und Druckfestigkeit.

Diese durch Tempern günstige Beeinflussung des Gefüges bei Einkristallen von grosser Mohs'schen Härte  kann deren Zähigkeit verbessern. Ein ähnlicher Effekt ist dadurch erzielbar, dass Einkristalle geringerer Mohs'schen Härte, z.B. Rutil mit der Mohs'schen Härte 7, oder Spinell mit der Mohs'schen Härte 8 mit gleichem Effekt eingesetzt werden können.

PATENT – ANSPRUECHE

1) Kombinations-Werkzeug zur spanenden oder zur span- und umformenden Feinbearbeitung von Werkstücken, vorzugsweise zur Feinbearbeitung von Bohrungen, bestehend aus einem Werkzeug-Grundkörper und mindestens einem damit verbundenen spanenden oder span- und umformenden Einsatzkörper mit einer dem zu bearbeitenden Werkstück angepasst geformten Bearbeitungsschneide, dadurch gekennzeichnet, dass der Einsatzkörper aus einem Einkristall geformt ist.

2) Kombinations-Werkzeug nach Patentanspruch 1, dadurch gekennzeichnet, dass der Einkristall aus der Kaborundum-Gruppe, daraus besonders Saphir und Rubin, stammt.

3) Kombinations-Werkzeug nach Anspruch 1 und 2, zur Feinbearbeitung von Bohrungen, besonders Reibahlen, mit mehreren über den Umfang des Werkzeug-Grundkörpers verteilt angeordneten Einsatzkörpern, dadurch gekennzeichnet, dass die Einkristalle durch an sich bekanntes Kleben mit dem Werkzeug-Grundkörper verbunden sind.

4) Reibahle zur span- und umformenden Feinbearbeitung von Bohrungen, bestehend aus einem Reibahlen-Grundkörper und mehreren über dessen Umfang verteilt aufgeklebten Einsatzkörpern, deren Bearbeitungsschneiden der zu bearbeitenden Bohrung angepasst geformt sind, dadurch gekennzeichnet, dass Einkristalle aus der Karborundumgruppe, besonders Saphir, Rubin als Einsatzkörper angewendet werden.

5) Kombinationswerkzeug nach einem der Ansprüche 1 – 3, dadurch gekennzeichnet, dass der geformte Einkristall nach einem mindestens eine thermische Behandlung umfassenden Tempern, mit dem Werkzeug-Grundkörper verbunden wird.

6) Reibahle nach Anspruch 4, dadurch gekennzeichnet, dass der Einkristall nach einem, mindestens eine thermische Behandlung einschliessenden Tempern, angewendet wird.

57) Kombinations-Werkzeug nach Anspruch 2, zur Feinbearbeitung von Bohrungnen, besonders Reibahlen, mit mehreren über den Umfang des Werkzeug-Grundkörper verteilt angeordneten Einsatzkörpern, dadurch gekennzeichnet, dass die Einkristalle durch an sich bekanntes Klemmen mit dem Werkzeug-Grundkörper verbunden sind.

8) Kombinations-Werkzeug nach Patentanspruch 1, dadurch gekennzeichnet, dass der Einkristall aus der Rutil- oder Spinell-Gruppe stammt.

9) Reibahle nach Patentanspruch 4, dadurch gekennzeichnet, dass Einkristalle aus Rutil oder Spinell als Einsatzkörper angewendet werden.

Fig.1    Fig. 2    Fig.3

Fig. 4

0054510

Nummer der Anmeldung

EP 81 81 0478

**Europäisches Patentamt**

# EUROPÄISCHER RECHERCHENBERICHT

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | B 23 D 77/02<br>B 23 B 27/20 |
| X | <u>DE - A - 1 943 705</u> (INDUSTRIE-DIAMANTEN)<br><br>* Seite 3, Spalte 2 - Spalte 8 * | 1,2,7 | |
| X | INDUSTRIAL DIAMOND REVIEW, Band 14, April 1954<br>LONDON (GB)<br>"Diamond reamer"<br>Seite 93<br><br>* das ganze Dokument * | 1,4 | **RECHERCHIERTE SACHGEBIETE (Int. Cl.³)** |
| X | TECHNISCHE RUNDSCHAU, Band 63, Nr. 42, 1. Oktober 1971<br>BERN (CH)<br>"Konische Diamantreibahle"<br>Seite 25<br><br>* das ganze Dokument * | 1,4 | B 23 B 27/00<br>B 23 C 5/00<br>B 23 D 77/00<br>B 24 D 5/00 |
| X | WERKSTATT UND BETRIEB, Band 107, Nr. 12, 1974<br>MÜNCHEN (DE)<br>K.S. HEILMANN: "Oberflächenglätten mit Diamantwerkzeugen"<br>Seite 740<br><br>* das ganze Dokument * | 1,4 | **KATEGORIE DER GENANNTEN DOKUMENTE**<br><br>X: von besonderer Bedeutung allein betrachtet<br>Y: von besonderer Bedeutung in Verbindung mit einer anderen Veröffentlichung derselben Kategorie<br>A: technologischer Hintergrund<br>O: nichtschriftliche Offenbarung<br>P: Zwischenliteratur<br>T: der Erfindung zugrunde liegende Theorien oder Grundsätze<br>E: älteres Patentdokument, das jedoch erst am oder nach dem Anmeldedatum veröffentlicht worden ist<br>D: in der Anmeldung angeführtes Dokument<br>L: aus andern Gründen angeführtes Dokument |
| X | INDUSTRIAL DIAMOND REVIEW, Band 23, Nr. 273, August 1963<br>LONDON (GB)<br>Z. SMIDA: "Diamond tools in precision engineering"<br>Seiten 188-192<br><br>* Seite 189 * | 1,3 | &: Mitglied der gleichen Patentfamilie, übereinstimmendes Dokument |

X Der vorliegende Recherchenbericht wurde für alle Patentansprüche erstellt.

| Recherchenort | Abschlußdatum der Recherche | Prüfer |
|---|---|---|
| Den Haag | 11-03-1982 | HORVATH |

EPA form 1503.1 06.78